# EUROPÄISCHE PATENTSCHRIFT

(11) **EP 2 372 477 B1**
(45) Veröffentlichungstag und Bekanntmachung des Hinweises auf die Patenterteilung: **14.01.2015**
(21) Anmeldenummer: 11158678.0
(22) Anmeldetag: 17.03.2011
(51) Int. Cl.: G05B 19/4061

(54) **Holzbearbeitungsmaschine und Verfahren zur Vermeidung von Kollisionen von Maschinen- und/oder Werkzeugteilen an einer solchen Holzbearbeitungsmaschine**
Wood working machine and method for avoiding collisions of machine and/or tool parts on such a wood working machine
Machine de traitement du bois et procédé déstiné à l'évitement de collisions entre des parts de la machine et/ou de l'outil sur une telle machine

(30) Priorität: 22.03.2010 DE 202010004021 U
(43) Veröffentlichungstag der Anmeldung: 05.10.2011
(73) Patentinhaber: Otto Martin Maschinenbau GmbH & Co. KG, 87724 Ottobeuren (DE)
(72) Erfinder: Hägele, Karl, 88459 Tannheim (DE); Hauer, Daniel, 87724 Ottobeuren (DE)
(74) Vertreter: Ernicke, Klaus Stefan

(56) Entgegenhaltungen:
- EP-A1- 0 845 723
- EP-A1- 1 990 697
- EP-A1- 2 216 697
- WO-A1-2008/025577
- DE-A1- 10 044 306
- DE-A1- 10 257 229
- DE-A1-102007 048 587

## Beschreibung

Die Erfindung betrifft eine Holzbearbeitungsmaschine mit den Merkmalen im Oberbegriff des Hauptanspruchs 1 und ein entsprechendes Verfahren.

Aus der DE 10 2007 022 784 A1 oder der parallelen EP 1 990 697 A1 ist ein Verfahren zur Kollisionserkennung und - prüfung an einer Holzbearbeitungsmaschine mit mehreren verstellbaren Achsen bekannt. Die betreffende Achse mit dem hiervon bewegten Maschinen- oder Werkzeugteil wird solange mit langsamer Geschwindigkeit verstellt, bis tatsächlich eine Kollision stattfindet, die durch Bewegungsblockade erkannt wird, wobei anschließend entsprechende Sicherungsmaßnahmen eingeleitet werden können.

Die WO2008/025577 A1 lehrt ein Verfahren und eine Einrichtung zur präventiven Kollisionsüberwachung eines Maschinenelements mit einem Gegenstand bei einer Werkzeugmaschine, Produktionsmaschine oder einer als Roboter ausgebildeten Maschine. Hierbei wird mit einem Kamerasystem die Geometrie und Position des Maschinenelements und des Gegenstands erfasst sowie ein zugehöriges Modell erstellt. Mit diesem Modell werden präventiv drohende Kollisionen von Maschinenelement und Gegenstand erkannt und vermieden.

Die DE 102 57 229 A1 und die DE 100 44 306 A1 offenbaren Werkzeugmaschinen mit einer ähnlichen präventiven Kollisionsüberwachung basierend auf einem Kamerasystem mit freiem Blick auf ein Werkzeug, ein Werkstück und die Arbeitsumgebung.

Es ist Aufgabe der vorliegenden Erfindung, eine Holzbearbeitungsmaschine mit höherer und besserer Sicherheit aufzuzeigen.

Die Erfindung löst diese Aufgabe mit den Merkmalen im Hauptanspruch 1 und ein entsprechendes Verfahren gemäß Anspruch 13. Die beanspruchte Sicherheitstechnik hat den Vorteil, dass sie Berührungen und damit evtl. Schäden von kollisionsrelevanten Maschinen- oder Werkzeugteilen vermeidet und damit kritische Situationen von vornherein verhindert. Sie kann dies im programmierten Maschinenbetrieb und im manuellen Betrieb leisten. Durch die Vorerfassung und Erkennung von drohenden Kollisionssituationen ist die beanspruchte Sicherheitstechnik schneller und zuverlässiger als der Stand der Technik. Die Einrichtung und der Betrieb der Holzbearbeitungsmaschine können dadurch beschleunigt und vereinfacht werden.

Die Sicherheitseinrichtung kann drohende Kollisionssituationen signalisieren. Dies kann einerseits eine Signalisierung an den Maschinenbediener in Form einer optischen und/oder akustischen Warnmeldung sein, z.B. mittels einer separaten oder ohnehin vorhandenen Anzeigeeinrichtung. Eine Signalisierung kann alternativ oder zusätzlich intern an die Steuerung der Holzbearbeitungsmaschine erfolgen und kann zur dortigen Einleitung von Sicherheitsmaßnahmen führen, etwa einer Ausführungsblockade für eine gesteuerte Achsbewegung, ggf. in Verbindung mit einer Aufforderung an den Bediener zur Änderung der Steuer- bzw. Positioniervorgaben. Auch eine manuelle Achsbetätigung per Taster oder dgl. kann rechtzeitig vor Eintritt einer Kollision blockiert werden. Die Sicherheitseinrichtung kann ggf. auch die Ausführung eines Bearbeitungsprogramms blockieren. Alternativ kann bei der Erstellung eines Bearbeitungsprogramms die Sicherheitseinrichtung begleitend steuerungsintern aktiviert werden und eine Vorabprüfung, etwa in der Art einer Plausibilitätskontrolle durchführen.

Die Sicherheitseinrichtung kann drohende Kollisionssituationen unter Einbeziehung eines Sicherheitsbereichs an einem kollisionsrelevanten Maschinen- oder Werkzeugteil detektieren. Dies erhöht die Sicherheit und erlaubt die Berücksichtigung von etwaigen Toleranzen, Positionsungenauigkeiten etc..

Die vorgreifende Detektion von drohenden Kollisionssituationen im projizierten Bewegungsbereich von bewegten Maschinen- oder Werkzeugteilen kann auf unterschiedlichem Wege erfolgen, z.B. durch ein Steuermodul in der Steuerung der Holzbearbeitungsmaschine. Die Kollisionserfassung kann auf rechnerischem Wege durch ein entsprechendes Programmteil im Steuermodul geschehen, wobei das Steuermodul selbst hardwaremäßig und/oder softwaremäßig, insbesondere als Softwaremodul in der Steuerung der Holzbearbeitungsmaschine, ausgestaltet sein kann. Eine besonders günstige und schnelle vorgreifliche Kollisionserfassung, die auch relativ wenig Rechenleistung beansprucht, liegt in der Vorausberechnung des Wegs des bewegten Maschinen- oder Werkzeugteils und der Prüfung, ob auf diesem Weg ein ggf. zuvor bestimmter kollisionsrelevanter Referenzpunkt an diesem Teil in den Sicherheitsbereich gelangt.

Für die Detektion von drohenden Kollisionssituationen ist die Form des von der betreffenden Achse bewegten Maschinen- oder Werkzeugteils bedeutsam. Von verschiedenen Maschinenteilen sind die Formen und Geometriedaten bereits bekannt und in der Sicherheitseinrichtung bzw. dem Steuermodul hinterlegt. Für die Form- und Geometriedaten von anderen veränderlichen Maschinen- oder Werkzeugteilen kann eine Erfassungseinrichtung vorgesehen sein, die unterschiedlich ausgebildet und angeordnet sein kann. Eine Formdatenerfassung kann zum einen durch eine händische Eingabe von gemessenen oder in beliebiger anderer Weise erfassten Form- und Geometriedaten erfolgen. Andererseits können solche Form- oder Geometriedaten bereits in der Sicherheitseinrichtung bzw. im Steuermodul gespeichert sein und bei Bedarf abgerufen werden. Auch eine datentechnische Eingabe solcher Form- und Geometriedaten, die beispielsweise von einem Werkzeughersteller als Datensatz zum Werkzeug bereit gestellt werden, ist möglich.

In weiterer Abwandlung kann die Holzbearbeitungsmaschine bzw. die Sicherheitseinrichtung auch eine eigene Erfassungseinrichtung, z.B. eine optische Erfassung mittels Lasersystem, Kamerasystem oder dgl. haben, mit dem nicht nur ein Werkzeug oder eine Werkzeugaufnahme zur Formdatenerfassung vermessen werden können, sondern ggf. auch andere ortsveränderliche Maschinenteile, z.B. Anschlaglineale eines Fräsanschlags, erfasst werden können, insbesondere wenn diese nicht gesteuert sind, sondern manuell angebracht bzw. eingestellt werden.

Die beanspruchte Sicherheitstechnik hat ferner den Vorteil, dass drohende Kollisionsgefahren signalisiert werden. Darüberhinaus können auch Abhilfemaßnahmen mit entsprechenden Vorgaben dem Bediener angezeigt werden. Er erhält dadurch die Möglichkeit, gezielt auf die drohende Kollisionssituation zu reagieren, z.B. mit Eingaben von Daten und/oder Befehlen, und diese Reaktion auch mit den jeweiligen Bearbeitungserfordernissen für das Werkstück abzustimmen. Eine Signalisierung kann durch eine geeignete Anzeigeeinrichtung optisch und/oder akustisch erfolgen, wobei Eingaben an der Anzeigeeinrichtung oder auf andere Weise vorgenommen werden können. Eine ggf. bereits vorhandene Anzeigeeinrichtung der Holzbearbeitungsmaschine kann für die Signalisierung und/oder Eingabe benutzt und in ihrem Funktionsumfang entsprechend erweitert werden.

Die beanspruchte Sicherheitseinrichtung kann als Erstausrüstung bei neuen Holzbearbeitungsmaschinen implementiert sein. Sie kann ferner an bestehenden Holzbearbeitungsmaschinen nachgerüstet werden. Auch eine Umrüstung vorhandener Erkennungseinrichtungen für faktisch auftretende Kollisionen durch die kollisionsvermeidende Sicherheitstechnik ist möglich.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine perspektivische Darstellung einer Holzbearbeitungsmaschine mit einer Sicherheitseinrichtung,
- Figur 2:: eine Schemadarstellung von verschiedenen verstellbaren Achsen und einer drohenden Kollisionssituation und
- Figur 3:: eine schematische Darstellung einer Anzeigeeinrichtung und einer Eingabemaske.
Die Erfindung betrifft eine Holzbearbeitungsmaschine (1) mit einer Sicherheitseinrichtung (17) zur Vermeidung von Kollisionen von Maschinen- und/oder Werkzeugteilen. Die Erfindung betrifft ferner die Sicherheitseinrichtung (17) selbst und auch ein Verfahren zur Vermeidung der vorgenannten Kollisionen.

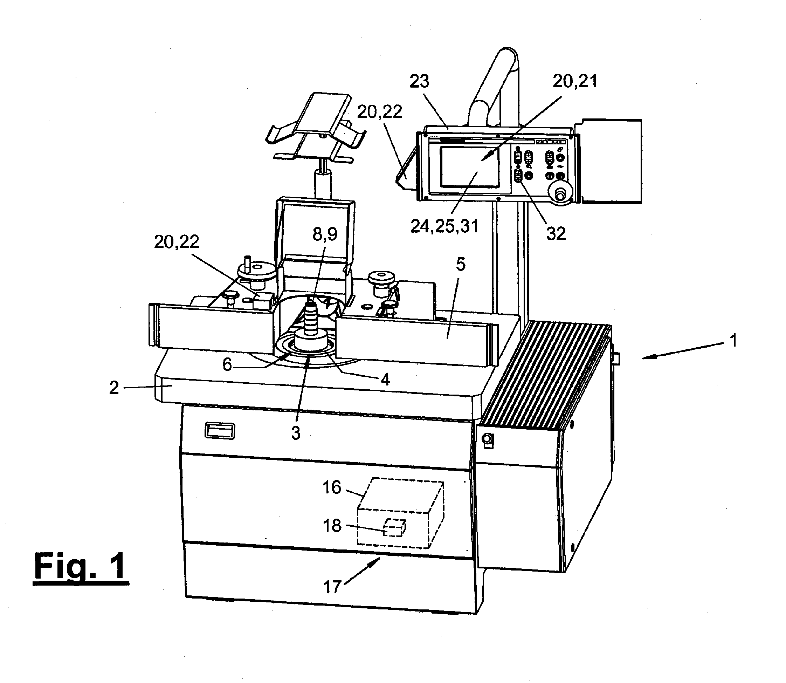

Die Holzbearbeitungsmaschine (1) kann in beliebig geeigneter Weise ausgebildet sein. Beispielsweise handelt es sich um eine Fräsmaschine, insbesondere eine Tischfräsmaschine. Sie ist in Figur 1 schematisch dargestellt.

Die Holzbearbeitungsmaschine (1) weist ein Maschinengestell oder Gehäuse mit einem Maschinentisch (2), einer Werkzeugaufnahme (6) für ein Werkzeug (10) und mit mehreren kraftbetätigten und manuell oder gesteuert verstellbaren Achsen (12,13,14,15) auf. Die besagten Achsen (12,13,14,15) werden auch als Stellachsen bezeichnet. Der Maschinentisch (2) weist eine Tischöffnung (3) für den Durchtritt der Werkzeugaufnahme (6) bzw. des Werkzeugs (10) sowie ggf. einen gesteuerten Anschlag (5), insbesondere einen Fräsanschlag, auf. Ferner können weitere manuell verstellbare Anschlagteile, z.B. Anschlaglineale oder dgl., vorhanden sein. Die Tischöffnung (3) kann starr oder veränderlich sein. Hierfür können z.B. im Maschinentisch (2) ineinander beweglich gelagerte und gesteuert angetriebene Ringe vorhanden sein, mit denen durch eine Ringdrehung der Öffnungsrandbereich (4) verlagert und insbesondere die Tischöffnung (3) vergrößert oder verkleinert werden kann.

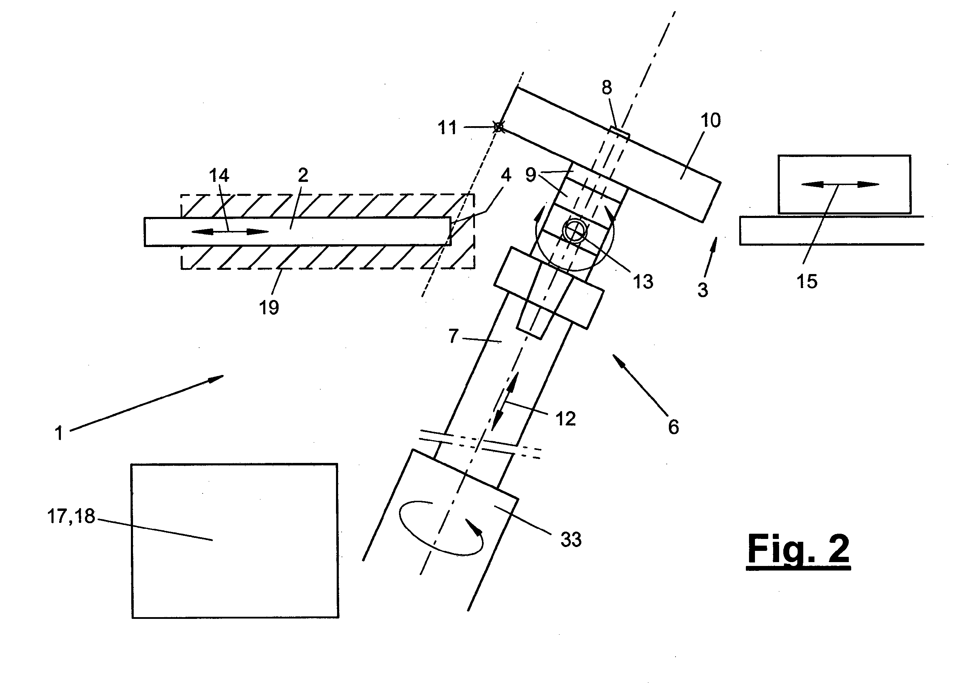

Das Werkzeug (10) kann ein beliebiges
Holzbearbeitungswerkzeug sein, welches z.B. rotierend von einem in Figur 2 schematisch angedeuteten Werkzeugantrieb (33), insbesondere einem Elektromotor oder dgl. angetrieben ist. Ein solches Werkzeug (10) kann z.B. als starrer oder verstellbarer Fräser ausgebildet sein. Der Werkzeugantrieb (33), insbesondere Drehantrieb, ist unter dem Maschinentisch (2) angeordnet.

Die Werkzeugaufnahme (6) kann unterschiedlich ausgeführt sein. Sie weist zum einen eine Werkzeugspindel (7) auf, die vom Werkzeugantrieb (33) drehend angetrieben und zudem um eine oder mehrere Achsen (12,13) verstellbar ist. Die Werkzeugspindel (7) kann am oberen Ende einen Aufnahmeflansch für das Werkzeug (10) oder für einen in Figur 1 schematisch dargestellten Werkzeugaufspanndorn (8) aufweisen, an dem das Werkzeug (10), ggf. unter Einlage von einem oder mehreren Zwischenringen (9), montiert wird. Figur 2 zeigt schematisch eine solche Einheit mit Werkzeug (10). Die ein- und ausfahrbare Werkzeugaufnahme (6) kann sich durch die Tischöffnung (3) erstrecken. Für die Werkzeugmontage kann es eine definierte Aufspannposition geben, in der z.B. die Werkzeugaufnahme (6) vertikal ausgerichtet ist, durch die Tischöffnung (3) ragt und eine vorbestimmte Höhe gegenüber dem Maschinentisch (2) einnimmt.

Die Holzbearbeitungsmaschine (1) weist ferner eine Steuerung (16), eine Anzeigeeinrichtung (23) und eine Eingabeeinrichtung (21) für die Eingabe von Steuerbefehlen, Parametern oder dgl. auf. Die Anzeige- und Eingabeeinrichtung (23,21) ist z.B. in einem Gehäuse an einem Tragarm oberhalb des Maschinentischs (2) in Augenhöhe eines Bedieners oder Anwenders angeordnet. Abweichend von der schematischen Darstellung von Figur 1 kann die Steuerung (16) statt im Maschinengestell auch in diesem Gehäuse angeordnet sein.

Die Steuerung (16) ist mit den der Übersicht halber nicht dargestellten Antrieben, insbesondere steuerbaren Elektromotoren, der vorerwähnten Achsen oder Stellachsen verbunden. Die Achsen können z.B. eine lineare Fahrachse (12) und/oder eine rotatorische Schwenkachse (13) der Werkzeugspindel (7) und des damit verbundenen Werkzeugs (10) sein. Eine andere steuerbare Achse (14) kann dem vorerwähnten Antrieb für die Verstellung der Tischöffnung (3) zugeordnet sein. Auch der Anschlag (5) kann mittels einer steuerbaren Achse (15) verstellbar sein. Alternativ oder zusätzlich können andere angetriebene und ggf. steuerbare Achsen oder Stellachsen der Holzbearbeitungsmaschine (1) vorhanden sein.

Durch die verschiedenen verstellbaren Achsen (12,13,14,15) entstehen komplexe Bewegungsmöglichkeiten, welche die Gefahr von Kollisionen von Maschinenteilen und/oder Werkzeug (10) bergen. Eine Werkzeugkollision kann z.B. zu einem Bruch des Werkzeugs (10) führen, wobei bei hoher Drehzahl aus der Holzbearbeitungsmaschine (1) geschleuderte Bruchstücke eine erhebliche Verletzungsgefahr für den Bediener oder Anwender mit sich bringen. Das Werkzeug (10) könnte z.B. mit dem Maschinentisch (2), insbesondere dem Öffnungsrand (4), oder mit dem Anschlag (5) oder einem anderen Maschinenteil kollidieren.

Desgleichen könnten Maschinenteile untereinander kollidieren, z.B. Teile der Werkzeugaufnahme (6), z.B. der Werkzeugaufspanndorn (8) und/oder ein Zwischenring (9), mit dem Maschinentisch (2), insbesondere dem Öffnungsrand (4), oder mit dem Anschlag (5) oder anderen Maschinenelementen. Auch die Werkzeugspindel (7) und insbesondere deren oberer Flansch haben eine Störkontur, die zu Kollisionen führen könnte. Kollisionsprobleme können vornehmlich dann entstehen, wenn Komponenten veränderlich sind, insbesondere unterschiedliche Werkzeuge (10) eingesetzt werden und unterschiedliche Aufspannstellen an der Werkzeugaufnahme (6) vorhanden sind. Desgleichen kann in der vorerwähnten Weise die Werkzeugaufnahme (6) variieren. Auch manuell angebrachte oder verstellte Maschinenteile, insbesondere die genannten Anschlaglineale oder dgl., können Kollisionsprobleme hervorrufen.

Die Holzbearbeitungsmaschine (1) weist eine Sicherheitseinrichtung (17) auf, mit der Kollisionsprobleme von vornherein vermieden werden können. Die Sicherheitseinrichtung (17) stellt drohende Kollisionssituationen im projizierten Bewegungsbereich von bewegten Maschinen- oder Werkzeugteilen an einer verstellbaren Achse (12,13,14,15) im voraus und berührungsfrei fest. Das Detektionsergebnis wird von der Sicherheitseinrichtung (17) signalisiert. Es kann im einfachsten Fall für den Bediener wahrnehmbar gemacht werden, insbesondere an der Anzeigeeinrichtung (23). Alternativ oder zusätzlich sind Warnmeldungen, Alarme oder dgl. auf optischer, akustischer oder sonstiger Wahrnehmungsbasis möglich.

Die Sicherheitseinrichtung (17) kann ferner das Detektionsergebnis an die Steuerung (16) signalisieren und hiervon beeinflusste weitere Maßnahmen auslösen. Dies können z.B. Abhilfemaßnahmen zur Kollisionsvermeidung sein, insbesondere eine Blockade der verstellten und von der Kollisionsgefahr betroffenen Achse (12,13,14,15). Alternativ oder zusätzlich kann eine andere Achse zur Behebung der Kollisionsgefahr aktiviert werden, die z.B. das kollisionsgefährdende Hindernis, beispielsweise den Öffnungsrand (4) oder den Anschlag (5), verlagert und aus dem Kollisionsbereich bringt.

Die Sicherheitseinrichtung (17) kann in unterschiedlicher Weise ausgebildet sein. Sie kann in einer separaten und eigenständigen Einheit bestehen, die ggf. an einer Holzbearbeitungsmaschine (1) nachgerüstet werden kann. Sie kann andererseits aus einem Steuermodul (18) bestehen, welches hardware- oder softwaremäßig ausgebildet ist und ggf. in die Steuerung (16) integriert oder dieser anderweitig zugeordnet sein kann. Das Steuermodul (18) kann insbesondere ein Softwaremodul sein, welches in die Steuerung (16) implementiert ist. Auch diese Variante ist einer Erstausrüstung, Nachrüstung und Umrüstung zugänglich. Durch die Zuordnung oder Implementierung besteht die erforderliche Verbindung zwischen der Sicherheitseinrichtung (17) und den anderen Komponenten der Holzbearbeitungsmaschine (1), insbesondere der Anzeigeeinrichtung (23), den Achsantrieben oder sonstigen Stellantrieben, der Steuerung (16) und dgl.

Eine Achse (12,13,14,15) kann auf unterschiedliche Weise verstellt werden. Zum einen ist eine gesteuerte Verstellung möglich, indem der Bediener an der Holzbearbeitungsmaschine (1), insbesondere der vorerwähnten Eingabeeinrichtung (21), eine gewünschte Position und/oder Winkellage bzw. Ausrichtung des bewegten Werkzeug- oder Maschinenteils eingibt, die dann von der Steuerung (16) durch Betätigung des zugehörigen Achsantriebs angefahren wird. Ferner kann eine Betätigung und Verstellung einer Achse (12,13,14,15) durch ein in der Steuerung (16) gespeichertes und vom Bediener zur Abarbeitung aufrufbares Bearbeitungsprogramm oder Anwendungsprogramm und somit ebenfalls gesteuert erfolgen. Außerdem ist eine manuelle Betätigung und Verstellung einer Achse (12,13,14,15) durch den Bediener möglich, z.B. durch Betätigen eines Eingabemittels (32), beispielsweise eines Tasters oder Schalters, der z.B. im Bereich der Eingabeeinrichtung (21) angeordnet ist. Hier kann in geeigneter Weise auch die zu betätigende Achse (12,13,14,15) ausgewählt werden. Mit dem Eingabemittel (32) wird der Antrieb der Achse (12,13,14,15) ein- und ausgeschaltet.

Die Holzbearbeitungsmaschine (1) bzw. die Sicherheitseinrichtung (17) weist eine Erfassungseinrichtung (20) für die Form und Anordnung von achsbewegten Teilen auf. Ein solches Teil kann z.B. ein Werkzeug (10) oder die Werkzeugaufnahme (6), insbesondere deren Werkzeugaufspanndorn (8) und/oder ein oder mehrere Zwischenringe (9), sein.

Die Erfassung der Form bzw. Geometrie der vorgenannten Maschinen- oder Werkzeugteile (3,4,5,8,9,10) kann auf unterschiedliche Weise erfolgen, wobei die Erfassungseinrichtung (20) dementsprechend unterschiedlich ausgebildet sein kann.

Zum einen können die Form- und Geometriedaten in irgendeiner beliebigen Weise gemessen und von Hand eingegeben werden. Die Messung kann z.B. in der Aufspannung oder extern und von Hand erfolgen. Für die manuelle Eingabe kann eine entsprechende Eingabeeinrichtung vorhanden sein, wofür die eingangs genannte Eingabeeinrichtung (21) der Holzbearbeitungsmaschine (1) herangezogen werden kann.

In einer anderen Variante können die Form- und Geometriedaten anderweitig erfasst und auf datentechnischem Wege eingegeben werden. In diesem Fall kann z.B. ein externes Messsystem mit Erstellung eines entsprechenden Datensatzes und Übergabe des Datensatzes über eine Schnittstelle an die Sicherheitseinrichtung (17) bzw. das Softwaremodul (18) befasst sein. Ein derartiger Datensatz kann auch von einem Werkzeughersteller bereit gestellt und in entsprechender Weise eingelesen werden. Die Dateneingabe kann per Leitung oder drahtlos sowie über Datenträger, z.B. eine DVD, einem Memorystick oder dgl. erfolgen. Der Datensatz kann hierbei als Ganzes übermittelt und eingelesen werden. Die betreffende Eingabeeinrichtung kann in diesem Fall als entsprechende Eingabeschnittstelle ausgebildet sein.

In einer dritten Variante kann eine messtechnische Erfassung der Form- und Geometriedaten vor Ort in der Holzbearbeitungsmaschine (1) und in der vorhandenen Aufspannsituation geschehen. Die Erfassungseinrichtung (20) weist hierfür eine entsprechende Messeinrichtung (22) auf. Diese kann auf die eingangs erwähnte definierte Aufspannposition des Werkstückträgers (6) gerichtet sein. Eine solche Messeinrichtung (22) kann alternativ oder zusätzlich auch auf einen Arbeitsbereich der Holzbearbeitungsmaschine (1) am Werkzeug (10) gerichtet sein, um dortige etwaige Kollisionseinflüsse, z.B. manuell angebaute Anschlaglineale oder dgl., zu erfassen.

Die Messeinrichtung (22) kann in beliebig geeigneter Weise ausgeführt sein und mit beliebigen Messmethoden arbeiten. Bevorzugt wird eine optische Messeinrichtung (22), die z.B. als digitales Kamerasystem mit einer Bilderfassung und Bildauswertung ausgerüstet ist. Sie kann in der Nachbarschaft der Arbeitsstelle angeordnet sein, z.B. am umgebenden Gehäuserand. Alternativ ist ein Anbau an anderer Stelle, z.B. in erhöhter Lage an der Anzeigeeinrichtung (23) möglich. Figur 1 zeigt beide Varianten. Die Messeinrichtung (22) kann die kollisionsrelevanten Maschinen- und Werkzeugteile optisch erfassen, vermessen und einen entsprechenden Datensatz erstellen sowie an die Sicherheitseinrichtung (17) übermitteln.

Alternativ kann die optische Messeinrichtung (22) als Lasermesssystem ausgebildet sein, welches die relevanten Konturen mit einem oder mehreren Laserstrahlen abtastet und aus dem Reflexionsverhalten Messergebnisse ableitet. Weitere Varianten sehen die Erfassung bzw. Messung mit Lichtschranken oder mit anderen Reflexionsprinzipen vor. Es kann auch mit anderen Lichtquellen oder sonstigen Strahlungsquellen gearbeitet werden.

In den verschiedenen Varianten der Messeinrichtung (22) können die Messergebnisse die Form und Geometrie der kollisionsrelevanten Teile und auch deren Position in der Holzbearbeitungsmaschine (1) repräsentieren. Diese Daten können insbesondere auf die Spindelachse und auf die verstellbare Achse (12) direkt bezogen und verwertbar sein.

Bei anderen von einer Achse (12,13,14,15) bewegten Maschinenteilen, insbesondere von solchen mit nicht veränderlicher Geometrie, beispielsweise der Werkzeugspindel (7), dem Öffnungsrand (4) bzw. der Tischöffnung (3), dem Fräsanschlag (5) oder dgl. können die Form- und Geometriedaten bekannt sein. Durch eine Wegerfassung an den verstellbaren Achsen (12,13,14,15) ist auch die Position und Ausrichtung der vorgenannten Teile bekannt und in der Steuerung (16) hinterlegt.

Die Sicherheitseinrichtung (17), insbesondere das Softwaremodul (18), kann aus den Form- und Geometriedaten sowie der Position der kollisionsrelevanten Maschinen-und/oder Werkzeugteile deren Weg längs der Achse bei deren Betätigung ermitteln und prüfen, ob das betreffende Maschinen- und/oder Werkzeugteil auf seinem Weg mit einem anderen Maschinenteil, beispielsweise der Tischöffnung (3) bzw. dem Öffnungsrand (4), dem Fräsanschlag (5) oder dgl. positionsmäßig in Deckung und in Kollision kommt. Hierbei kann die Sicherheitseinrichtung (17) den betreffenden Maschinenteilen (3,4,5) einen vorgegebenen oder definierten Sicherheitsbereich (19) zuweisen. Dies kann z.B. eine parallele und in einem bestimmten Abstand distanzierte Hüllkontur rund um den betreffenden Maschinenteilbereich sein, wie dies Figur 2 beispielhaft verdeutlicht. Der betrachtete Sicherheitsbereich (19) ist in diesem Fall stationär unter der Annahme, dass dieses Maschinenteil (3,4,5) momentan nicht bewegt wird. Alternativ oder zusätzlich kann auch dem bewegten Maschinen- und/oder Werkzeugteil (8,9,10) ein Sicherheitsbereich (19) zugewiesen werden. Dieser müsste bei der rechnerischen Erfassung der Teilbewegung entlang der Achse mitgeführt werden.

Um die Kollisionserfassung und die dabei zu leistende Rechenarbeit zu vereinfachen, können aus den erfassten oder gegebenen Form- und Geometriedaten des bewegten Maschinen- oder Werkzeugteils (8,9,10) für eine etwaige Kollision relevante Referenzpunkte (11) an der Form oder Geometrie bestimmt werden. Dies kann ein einzelner Punkt oder mehrere Punkte sein. Der oder die Punkt(e) können dynamisch bestimmt werden, z.B. in Abhängigkeit von der Spindelneigung. Bei dem z.B. in Figur 2 dargestellten Werkzeug (10) ist dies ein Referenzpunkt (11) an der unteren Umfangskontur des Werkzeugs (10), der dem benachbarten Öffnungsrand (4) am nächsten gelegen ist. Eine Bestimmung eines Referenzpunktes (11) kann z.B. nach den Kriterien der am weitesten von der Spindelachse distanzierten Lage und zugleich der höchsten oder tiefsten Raumlage erfolgen.

Bei der Kollisionserfassung können mehrere bewegte Maschinen- und/oder Werkzeugteile gemeinsam überprüft werden, d.h. z.B. außer dem Werkzeug (10) auch Zwischenringe (9) und/oder die Spindel (7) bzw. der Aufspanndorn (8). Für die verschiedenen Teile können jeweils verschiedene vorgegebene oder dynamisch nach Kollisionsrelevanz bestimmte Referenzpunkte (11) berücksichtigt werden.

Bei der Kollisionsprüfung wird der Weg dieses Referenzpunktes (11) und seine Verlagerung in den Sicherheitsbereich (19) z.B. des Öffnungsrandes (4) detektiert. Alternativ kann auch ohne Sicherheitsbereich (19) gearbeitet werden, wobei die Punktverlagerung in den Erstreckungsbereich des Maschinenteils (3,4,5) betrachtet und geprüft wird.

Wie eingangs erwähnt, ist z.B. eine vorgreifliche Kollisionserfassung über eine Vorausberechnung des Wegs der bewegten Maschinen- oder Werkzeugteile möglich. Dies betrifft z.B. das gesteuerte Positionieren von Achsen (12,13,14,15) in Selbsthaltung mit vorheriger Positionseingabe.

Bei der Variante einer manuellen Verstellung einer Achse (12,13,14,15) im Hold-to-Run-Betrieb über einen Taster (32) oder dgl. weicht das Vorgehen jedoch ab. Hier ist keine Vorausberechnung möglich. Es erfolgt ein permanenter Vergleich zwischen der Position des bewegten Maschinen-oder Werkzeugteils mit dem Sicherheitsbereich (19) der kollisionsgefährdeten in Ruhe befindlichen Maschinenteile. Dies kann z.B. durch Koordinatenvergleich geschehen. Ein solcher Positionsvergleich ist auch zur Kollisionserfassung beim gesteuerten Positionieren von Achsen (12,13,14,15) in Selbsthaltung mit vorheriger Positionseingabe möglich.

Eine mögliche Kollision kann im Vorgriff auch auf andere Weise, z.B. über ein Vektorprodukt und dessen Auswertung detektiert werden. Hierfür werden entlang der tatsächlichen Kontur des relativ ortsfesten Maschinenteils (3,4,5) oder entlang des Sicherheitsbereichs (19) an den repräsentativen Bereichen Vektoren gebildet, wobei am bewegten Maschinen- oder Werkzeugteil (8,9,10), insbesondere an einem oder mehreren Referenzpunkten (11), ebenfalls ein in Achsbewegungsrichtung ausgerichteter Vektor gebildet wird. Aus dem Produkt bzw. den Produkten dieser Vektoren kann festgestellt werden, ob der mitbewegte Vektor innerhalb oder außerhalb des Erstreckungsbereichs bzw. des Sicherheitsbereichs (19) zu liegen kommt.

Daneben kann es andere Mess- und Detektionsmethoden für solche Kollisionen geben, z.B. durch Strahlenemission in Achsrichtung und Betrachtung evtl. Reflexionen.

Wird eine drohende Kollision detektiert, kann von der Sicherheitseinrichtung (17) in der vorerwähnten Weise eine weitere Verstellung der betroffenen Achse (12,13,14,15) blockiert oder eine andere Abhilfemaßnahme getroffen und mittels der Steuerung (16) ausgeführt werden. Insbesondere kann jede weitere kollisionsgefährliche Bewegung von einschlägigen Achsen (12,13,14,15) gesperrt werden.

Zur Behebung der Kollisionsgefahr kann die Sicherheitseinrichtung (17), ggf. in Kooperation mit der Steuerung (16), eigenständige Abhilfemaßnahmen treffen, z.B. im Falle von Figur 2 eine Rückwärtsbewegung des Tischrandes (4) mittels der entsprechend angesteuerten Achse (14), damit eine weitere Bewegung des Werkzeugs (10) und der Achse (12) möglich ist und das Werkzeug (10) seine vorgesehene Position einnehmen kann. Entsprechend kann reagiert werden, wenn eine Kollision durch eine andere Achsbewegung, z.B. durch ein Schwenken des Werkzeugs (10) um die Schwenkachse (13) droht. Ähnliche Fälle können eintreten, wenn der Aufspanndorn (8) und ggf. hieran montierte ein oder mehrere Zwischenringe (9) von den Achsen (12,13) bewegt werden und hierbei eine Kollision mit einem anderen relativ ortsfesten Maschinenteil (3,4,5) droht.

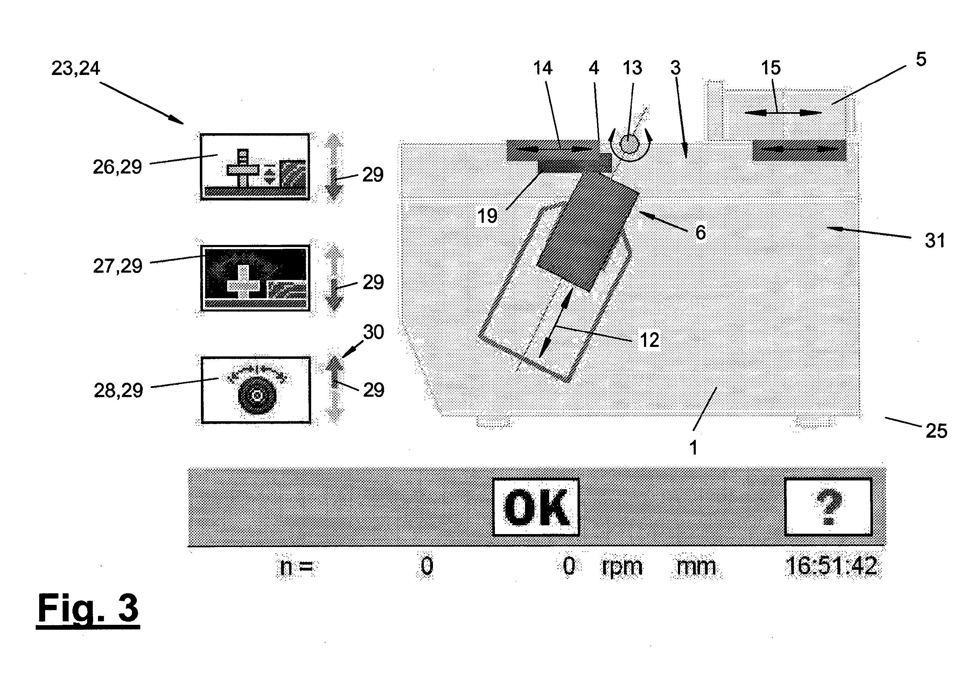

Ferner können Abhilfemaßnahmen durch den Bediener veranlasst werden. Hierfür kann die Sicherheitseinrichtung (17) mit der Anzeigeeinrichtung (23) verbunden sein und an dieser die drohende Kollisionssituation darstellen. Figur 3 verdeutlicht einen solchen Fall.

Die Anzeigeeinrichtung (23) besitzt ein Display (24) zur Darstellung von Grafiken oder Bildern, das z.B. als Bildschirm und insbesondere als berührungsempfindlicher Touch Screen ausgebildet sein kann. Das Display (24) kann auch eine Eingabemaske (25) zeigen. Das Display (24) kann außerdem eine symbolhafte Maschinenanzeige (31) mit einer Darstellung der drohenden Kollisionslage und der beteiligten Achsen (12,13,14,15) aufweisen. Hierzu ist z.B. gemäß Figur 3 ein Querschnitt durch das Maschinengestell (1) schematisch dargestellt, wobei auch die Achsen (12,13,14,15) und die zugehörigen Maschinenteile (3,4,5,6) zumindest schematisch gezeigt sind.

Die Sicherheitseinrichtung (17) kann an der Anzeigeeinrichtung (23) auch eine Vorgabe (30) zur Kollisionsvermeidung und zur Angabe der möglichen oder zulässigen Abhilfemaßnahmen darstellen. Insbesondere können Steuerbefehle dargestellt werden, die aus Kollisionsgründen zulässig oder unzulässig sind.

Wie Figur 3 verdeutlicht, weist das Display (24) und insbesondere die Eingabemaske (25), ein oder mehrere Anzeigeelemente (26,27,28) für jeweils eine für die Kollisionssituation relevante und verstellbare Achse (12,13,14,15) auf. Dies sind z.B. drei übereinander angeordnete symbolhafte Anzeigeelemente (26,27,28), die in der Reihenfolge von oben nach unten eine Höhenverstellung gemäß der Achse (12), eine Schwenkverstellung gemäß der Achse (13) und eine Veränderung der Tischöffnung (3) gemäß der Achse (14) anzeigen. Diese Anzeigeelemente (26,27,28) können sensitiv sein und ein Eingabemittel (29) darstellen, das durch Berührung der betreffenden Displaystelle aktiviert wird.

Die Anzeigeelemente (26,27,28) können auch bereits eine gewisse Hilfestellung oder Vorgabe implementieren, indem nur die für eine Abhilfe tatsächlich verfügbaren und geeigneten Achsen (12,13,14) dargestellt bzw. symbolisiert werden. Neben den Anzeigeelementen (26,27,28) können ein oder mehrere weitere Eingabemittel (29) angeordnet und zugeordnet sein, die z.B. pfeilförmige Steuerelemente darstellen und die Bewegungsrichtung der betreffenden Achse (12,13,14) symbolisieren. In diesen Steuerelementen (29) kann eine Vorgabe (30) implementiert sein, indem durch farbige Hervorhebung oder auf andere Weise die als Abhilfemaßnahme zulässige oder verfügbare Steuer- bzw. Bewegungsfunktion erkennbar gemacht wird. Beispielsweise stehen gemäß Figur 3 nur die durch Abdunklung markierten Pfeil- und Bewegungsrichtungen der betreffenden Achse zur Verfügung.

Die betreffenden Eingabemittel (29) können wiederum durch Schirmberührung betätigt werden. Alternativ können diese Elemente reine Anzeigesymbole sein, wobei die Auswahl und Eingabe über ein anderes Eingabemittel (32), z.B. eine Taste oder einen Schalter an der nebenan angeordneten Eingabeeinrichtung (21) vorgenommen wird.

Das Display (24) kann innerhalb oder außerhalb der Eingabemaske (25) weitere Informationen oder Eingabemöglichkeiten an den Bediener übermitteln. Über das Display (24) bzw. den Touch Screen ist auch die eingangs erwähnte Eingabe von extern gemessenen Form- oder Geometriedaten der veränderbaren Maschinen- oder Werkstückteile (8,9,10) möglich. Desgleichen kann aus einer vorhandenen Sammlung von Datensätzen für gegebene Maschinen- und/oder Werkzeugteile über das Display (24) eine Anzeige und Auswahl getroffen werden.

Das Display (24) und insbesondere die Maschinenanzeige (31) reagiert auf Abhilfemaßnahmen des Bedieners und dabei verändert sich entsprechend die Situationsdarstellung, wobei der Bediener aus der veränderten Anzeige den Maßnahmenerfolg erkennen und die Abhilfe auf den wirklich notwendigen Maßnahmenumfang beschränken kann.

Abwandlungen der gezeigten und beschriebenen Ausführungsformen sind in verschiedener Weise möglich. Dies betrifft die Art und Form der eingesetzten Maschinen-und Werkzeugteile, die konstruktive Gestaltung der Holzbearbeitungsmaschine (1) und die Ausgestaltung und Anordnung der Sicherheitseinrichtung (17). Die Anzeigeeinrichtung (23) kann statt eines Displays (24) ein anderes und ggf. zusätzliches optisches Anzeigeelement, z.B. einen Bildwerfer oder dgl. aufweisen. Alternativ oder zusätzlich ist auch eine andere, z.B. akustische Anzeige möglich. Eingaben von einem Bediener können statt über einen Touch Screen und eine Eingabemaske (25) auf andere Weise, z.B. über eine Tastatur, eine Mouse oder ein Touchpad oder ein anderes Eingabeelement erfolgen.

### BEZUGSZEICHENLISTE

- 1: Holzbearbeitungsmaschine
- 2: Maschinentisch
- 3: Tischöffnung
- 4: Öffnungsrand
- 5: Anschlag, Fräsanschlag
- 6: Werkzeugaufnahme
- 7: Werkzeugspindel
- 8: Werkzeugaufspanndorn
- 9: Zwischenring
- 10: Werkzeug
- 11: Referenzpunkt
- 12: Achse, Höhenachse Spindel
- 13: Achse, Schwenkachse Spindel
- 14: Achse Tischöffnung
- 15: Achse Fräsanschlag
- 16: Steuerung
- 17: Sicherheitseinrichtung
- 18: Steuermodul
- 19: Sicherheitsbereich
- 20: Erfassungseinrichtung
- 21: Eingabeeinrichtung
- 22: Messeinrichtung
- 23: Anzeigeeinrichtung
- 24: Display, Touch Screen
- 25: Eingabemaske
- 26: Anzeigeelement, Höhenverstellung
- 27: Anzeigeelement, Schwenkverstellung
- 28: Anzeigeelement, Tischöffnung
- 29: Eingabemittel, Steuerelement
- 30: Vorgabe
- 31: Maschinenanzeige
- 32: Eingabemittel, Taster
- 33: Werkzeugantrieb

## Patentansprüche

1. Holzbearbeitungsmaschine mit einem Maschinentisch (2) nebst Tischöffnung (3), einer Werkzeugaufnahme (6) nebst einem Werkzeug (10) und einem unter dem Maschinentisch (2) angeordneten Werkzeugantrieb (33), einer oder mehreren verstellbaren Achsen (12, 13, 14, 15) und einer Steuerung (16), **dadurch gekennzeichnet, dass** die Holzbearbeitungsmaschine (1) eine Sicherheitseinrichtung (17) aufweist, die drohende Kollisionssituationen im projizierten Bewegungsbereich von bewegten Maschinen- oder Werkzeugteilen an einer verstellbaren Achse (12,13,14,15) im voraus berührungsfrei feststellt und signalisiert und
die Sicherheitseinrichtung (17) für die Kollisionserfassung einen Sicherheitsbereich (19) an einem kollisionsrelevanten Teil, insbesondere an der Tischöffnung (3) und/oder an einem Anschlag (5) einbezieht und
die Sicherheitseinrichtung (17) an der erfassten Form von bewegten Teilen, insbesondere von einem Werkzeug (10) oder von einer Werkzeugaufnahme (6), einen oder mehrere kollisionsrelevante Referenzpunkte (11) bestimmt und
die Sicherheitseinrichtung (17) einen Weg eines kollisionsrelevanten Referenzpunkts (11) bei der Achsverstellung und dessen Verlagerung in den Sicherheitsbereich (19) an einem kollisionsrelevanten Teil detektiert.

2. Holzbearbeitungsmaschine nach Anspruch 1, **dadurch gekennzeichnet, dass** die Sicherheitseinrichtung (17) ein Steuermodul (18) in der Steuerung (16) aufweist.

3. Holzbearbeitungsmaschine nach Anspruch 1 oder 2, **dadurch gekennzeichnet, dass** die Holzbearbeitungsmaschine (1) eine Erfassungseinrichtung (20) für die Form und Anordnung von bewegten Teilen, insbesondere von einem Werkzeug (10) oder von einer Werkzeugaufnahme (6) aufweist.

4. Holzbearbeitungsmaschine nach Anspruch 1, 2 oder 3, **dadurch gekennzeichnet, dass** eine Erfassungseinrichtung (20) eine Eingabeeinrichtung (21) für formrelevante Daten von bewegten Teilen und/oder eine Messeinrichtung (22) für die Erfassung formrelevanter Daten von bewegten Teilen und/oder kollisionsrelevanten Teilen der Holzbearbeitungsmaschine (1) aufweist, wobei der Erfassungsbereich der Messeinrichtung (22) auf eine Aufspannposition der Werkzeugaufnahme (6) und/oder auf einen Arbeitsbereich der Holzbearbeitungsmaschine (1) gerichtet ist.

5. Holzbearbeitungsmaschine nach einem der vorhergehenden Ansprüche, **dadurch gekennzeichnet, dass** die Werkzeugaufnahme (6) eine Werkzeugspindel (7), einen Werkzeugaufspanndorn (8) und ggf. einen oder mehrere Zwischenringe (9) aufweist.

6. Holzbearbeitungsmaschine nach einem der vorhergehenden Ansprüche, **dadurch gekennzeichnet, dass** die Messeinrichtung (22) als optische Messeinrichtung, insbesondere als Lasermessystem oder als Kamerasystem ausgebildet ist.

7. Holzbearbeitungsmaschine nach einem der vorhergehenden Ansprüche, **dadurch gekennzeichnet, dass** die Sicherheitseinrichtung (17) bei drohender Kollision eine Warnung signalisiert und/oder die Achsbewegung sperrt.

8. Holzbearbeitungsmaschine nach einem der vorhergehenden Ansprüche, **dadurch gekennzeichnet, dass** die Sicherheitseinrichtung (17) mit einer Anzeigeeinrichtung (23) verbunden ist und an dieser die drohende Kollisionssituation und/oder eine Vorgabe (30) zur Kollisionsvermeidung, insbesondere aus Kollisionsgründen zulässige und unzulässige Steuerbefehle darstellt.

9. Holzbearbeitungsmaschine nach einem der vorhergehenden Ansprüche, **dadurch gekennzeichnet, dass** eine Anzeigeeinrichtung (23) ein Display (24) aufweist, das insbesondere als Touch-Screen ausgebildet ist.

10. Holzbearbeitungsmaschine nach einem der vorhergehenden Ansprüche, **dadurch gekennzeichnet, dass** eine Anzeigeeinrichtung (23), insbesondere ein Display (24), eine Maschinenanzeige (31) mit einer Darstellung der Kollisionslage und der beteiligten Achse(n) (12,13,14,15) aufweist.

11. Holzbearbeitungsmaschine nach einem der vorhergehenden Ansprüche, **dadurch gekennzeichnet, dass** eine Anzeigeeinrichtung (23), insbesondere ein Display (24), ein Anzeigeelement (26,27,28) für eine verstellbare Achse (12,13,14,15) mit einer zugeordneten Darstellung der Vorgabe (30) aufweist.

12. Holzbearbeitungsmaschine nach einem der vorhergehenden Ansprüche, **dadurch gekennzeichnet, dass** eine Anzeigeeinrichtung (23), insbesondere ein Display (24), eine Eingabemaske (25) mit einem achsbezogenen Eingabemittel (29) und einer Vorgabe (30) für die Eingabemöglichkeiten aufweist.

13. Verfahren zur Vermeidung von Kollisionen von Maschinen- und/oder Werkzeugteilen an einer Holzbearbeitungsmaschine (1), die einen Maschinentisch (2) nebst Tischöffnung (3), eine Werkzeugaufnahme (6) nebst einem Werkzeug (10) und einem unter dem Maschinentisch (2) angeordneten Werkzeugantrieb (33), eine oder mehrere verstellbaren Achsen (12,13,14,15) und eine Steuerung (16) sowie eine Sicherheitseinrichtung (17) aufweist, **dadurch gekennzeichnet, dass**
von der Sicherheitseinrichtung (17) drohende Kollisionssituationen im projizierten Bewegungsbereich von bewegten Maschinen- oder Werkzeugteilen an einer verstellbaren Achse (12,13,14,15) im voraus berührungsfrei festgestellt und signalisiert werden und
die Sicherheitseinrichtung (17) für die Kollisionserfassung einen Sicherheitsbereich (19) an einem kollisionsrelevanten Teil, insbesondere an der Tischöffnung (3) und/oder an einem Anschlag (5) einbezieht, und
die Sicherheitseinrichtung (17) an der erfassten Form von bewegten Teilen, insbesondere von einem Werkzeug (10) oder von einer Werkzeugaufnahme (6), einen oder mehrere kollisionsrelevante Referenzpunkte (11) bestimmt und
die Sicherheitseinrichtung (17) einen Weg eines kollisionsrelevanten Referenzpunkts (11) bei der Achsverstellung und dessen Verlagerung in den Sicherheitsbereich (19) an einem kollisionsrelevanten Teil detektiert.

## Claims

1. Woodworking machine having a machine table (2) together with table opening (3), a tool holder (6) together with a tool (10) and a tool drive (33) arranged under the machine table (2), one or more adjustable axes (12, 13, 14, 15) and a control system (16),
**characterized in that**
the woodworking machine (1) has a safety device (17), which, in advance and without contact, determines and signals impending collision situations in the projected movement area of moved machine or tool parts on an adjustable axis (12, 13, 14, 15), and
the safety device (17) for the collision detection includes a safety area (19) on a collision-relevant part, in particular on the table opening (3) and/or on a stop (5), and
the safety device (17) determines one or more collision-relevant reference points (11) on the detected shape of moved parts, in particular of a tool (10) or a tool holder (6), and
the safety device (17) detects a path of a collision-relevant reference point (11) during the axial adjustment and the displacement of the said reference point into the safety area (19) on a collision-relevant part.

2. Woodworking machine according to Claim 1, **characterized in that** the safety device (17) has a control module (18) in the control system (16).

3. Woodworking machine according to Claim 1 or 2, **characterized in that** the woodworking machine (1) has a detection device (20) for the shape and arrangement of moved parts, in particular of a tool (10) or a tool holder (6).

4. Woodworking machine according to Claim 1, 2 or 3, **characterized in that** a detection device (20) has an input device (21) for shape-relevant data of moved parts and/or a measuring device (22) for the detection of shape-relevant data of moved parts and/or collision-relevant parts of the woodworking machine (1), the detection area of the measuring device (22) being aimed at a clamping position of the tool holder (6) and/or at a working area of the woodworking machine (1).

5. Woodworking machine according to one of the preceding claims, **characterized in that** the tool holder (6) has a tool spindle (7), a tool expanding mandrel (8) and, if appropriate, one or more intermediate rings (9).

6. Woodworking machine according to one of the preceding claims, **characterized in that** the measuring device (22) is formed as an optical measuring device, in particular as a laser measuring system or as a camera system.

7. Woodworking machine according to one of the preceding claims, **characterized in that**, in the event of an impending collision, the safety device (17) signals a warning and/or blocks the axis movement.

8. Woodworking machine according to one of the preceding claims, **characterized in that** the safety device (17) is connected to an indicating device (23) and displays on the latter the impending collision situation and/or a guideline (30) for collision avoidance, in particular displays control commands that are permissible and impermissible for collision reasons.

9. Woodworking machine according to one of the preceding claims, **characterized in that** an indicating device (23) has a display (24), which in particular is formed as a touch screen.

10. Woodworking machine according to one of the preceding claims, **characterized in that** an indicating device (23), in particular a display (24), has a machine indicator (31) with a representation of the collision situation and the axis or axes (12, 13, 14, 15) involved.

11. Woodworking machine according to one of the preceding claims, **characterized in that** an indicating device (23), in particular a display (24), has an indicating element (26, 27, 28) for an adjustable axis (12, 13, 14, 15) with an associated display of the guideline (30).

12. Woodworking machine according to one of the preceding claims, **characterized in that** an indicating device (23), in particular a display (24), has an input mask (25) with an axis-related input means (29) and a guideline (30) for the possible inputs.

13. Method for avoiding collisions of machine and/or tool parts on a woodworking machine (1), which has a machine table (2) together with table opening (3), a tool holder (6) together with a tool (10) and a tool drive (33) arranged under the machine table (2), one or more adjustable axes (12, 13, 14, 15) and a control system (16) and also a safety device (17),
**characterized in that**
impending collision situations in the projected movement area of moved machine or tool parts on an adjustable axis (12, 13, 14, 15) are detected and signalled in advance without contact by the safety device (17), and
the safety device (17) for the collision detection includes a safety area (19) on a collision-relevant part, in particular on the table opening (3) and/or on a stop (5), and
the safety device (17) determines one or more collision-relevant reference points (11) on the detected shape of moved parts, in particular of a tool (10) or a tool holder (6), and
the safety device (17) detects a path of a collision-relevant reference point (11) during the axial adjustment and the displacement of the said reference point into the safety area (19) on a collision-relevant part.

## Revendications

1. Machine de travail du bois comprenant une table de machine (2) avec une ouverture de table (3), un porte-outil (6) avec un outil (10) et un entraînement d'outil (33) disposé sous la table de machine (2), un ou plusieurs axes réglables (12, 13, 14, 15) et une commande (16), **caractérisée en ce que**
la machine de travail du bois (1) présente un dispositif de sécurité (17) qui détermine à l'avance sans contact et signale des risques de situations de collision dans la plage de déplacement envisagée de pièces de machine ou d'outil en mouvement sur un axe réglable (12, 13, 14, 15) et
le dispositif de sécurité (17) pour la détection de collisions inclut une zone de sécurité (19) au niveau d'une pièce pertinente en termes de collision, en particulier au niveau de l'ouverture de table (3) et/ou au niveau d'une butée (5) et
le dispositif de sécurité (17) détermine sur la forme détectée de pièces en mouvement, en particulier d'un outil (10) ou d'un porte-outil (6), un ou plusieurs points de référence (11) pertinents en termes de collision et
le dispositif de sécurité (17) détecte une trajectoire d'un point de référence (11) pertinent en termes de collision lors du réglage axial et son déplacement dans la zone de sécurité (19) au niveau d'une pièce pertinente en termes de collision.

2. Machine de travail du bois selon la revendication 1, **caractérisée en ce que** le dispositif de sécurité (17) présente un module de commande (18) dans la commande (16).

3. Machine de travail du bois selon la revendication 1 ou 2, **caractérisée en ce que** la machine de travail du bois (1) présente un dispositif de détection (20) pour la forme et l'agencement de pièces en mouvement, en particulier d'un outil (10) ou d'un porte-outil (6).

4. Machine de travail du bois selon la revendication 1, 2 ou 3, **caractérisée en ce qu'**un dispositif de détection (20) présente un dispositif de saisie (21) pour des données relatives à la forme de pièces en mouvement et/ou un dispositif de mesure (22) pour détecter des données relatives à la forme de pièces en mouvement et/ou de pièces pertinentes en termes de collision de la machine de travail du bois (1), la zone de détection du dispositif de mesure (22) étant orientée vers une position de serrage du porte-outil (6) et/ou vers une zone de travail de la machine de travail du bois (1).

5. Machine de travail du bois selon l'une quelconque des revendications précédentes, **caractérisée en ce que** le porte-outil (6) présente une broche d'outil (7), un mandrin de serrage d'outil (8) et éventuellement une ou plusieurs bagues intermédiaires (9).

6. Machine de travail du bois selon l'une quelconque des revendications précédentes, **caractérisée en ce que** le dispositif de mesure (22) est réalisé sous forme de dispositif de mesure optique, en particulier sous forme de système de mesure laser ou sous forme de système de caméra.

7. Machine de travail du bois selon l'une quelconque des revendications précédentes, **caractérisée en ce que** le dispositif de sécurité (17), lors d'un risque de collision, émet un avertissement et/ou bloque le mouvement des axes.

8. Machine de travail du bois selon l'une quelconque des revendications précédentes, **caractérisée en ce que** le dispositif de sécurité (17) est connecté à un dispositif d'affichage (23) et représente sur celui-ci le risque de situation de collision et/ou une consigne préalable (30) d'évitement de collision, en particulier des ordres de commande admissibles et inadmissibles pour des raisons de collision.

9. Machine de travail du bois selon l'une quelconque des revendications précédentes, **caractérisée en ce qu'**un dispositif d'affichage (23) présente un écran (24) qui est réalisé notamment sous forme d'écran tactile.

10. Machine de travail du bois selon l'une quelconque des revendications précédentes, **caractérisée en ce qu'**un dispositif d'affichage (23), en particulier un écran (24), présente un affichage de machine (31) avec une représentation de la position de collision et du ou des axes concernés (12, 13, 14, 15).

11. Machine de travail du bois selon l'une quelconque des revendications précédentes, **caractérisée en ce qu'**un dispositif d'affichage (23), en particulier un écran (24), présente un élément d'affichage (26, 27, 28) pour un axe réglable (12, 13, 14, 15) avec une représentation associée de la consigne préalable (30).

12. Machine de travail du bois selon l'une quelconque des revendications précédentes, **caractérisée en ce qu'**un dispositif d'affichage (23), en particulier un écran (24), présente un masque de saisie (25) avec un moyen de saisie rapporté à l'axe (29) et une consigne préalable (30) pour les possibilités de saisie.

13. Procédé pour éviter les collisions de pièces de machine et/ou de pièces d'outil sur une machine de travail du bois (1) qui présente une table de machine (2) avec une ouverture de table (3), un porte-outil (6) avec un outil (10) et un entraînement d'outil (33) disposé sous la table de machine (2), un ou plusieurs axes réglables (12, 13, 14, 15) et une commande (16), ainsi qu'un dispositif de sécurité (17), **caractérisé en ce que** le dispositif de sécurité (17) détermine à l'avance sans contact et signale des risques de situations de collision dans la plage de déplacement envisagée de pièces de machine ou d'outil en mouvement sur un axe réglable (12, 13, 14, 15) et
le dispositif de sécurité (17) pour la détection de collisions inclut une zone de sécurité (19) au niveau d'une pièce pertinente en termes de collision, en particulier au niveau de l'ouverture de table (3) et/ou au niveau d'une butée (5) et
le dispositif de sécurité (17) détermine sur la forme détectée de pièces en mouvement, en particulier d'un outil (10) ou d'un porte-outil (6), un ou plusieurs points de référence (11) pertinents en termes de collision et
le dispositif de sécurité (17) détecte une trajectoire d'un point de référence (11) pertinent en termes de collision lors du réglage axial et son déplacement dans la zone de sécurité (19) au niveau d'une pièce pertinente en termes de collision.
